# EUROPÄISCHE PATENTSCHRIFT

(11) **EP 2 461 616 B1**
(45) Veröffentlichungstag und Bekanntmachung des Hinweises auf die Patenterteilung: **15.07.2020**
(21) Anmeldenummer: 11184453.6
(22) Anmeldetag: 10.10.2011
(51) Int. Cl.: H04W 48/02, H04K 3/00

(54) **Verfahren zum Erkennen von aktiven Mobilstationen**
Method for detecting active mobile stations
Procédé de reconnaissance de stations mobiles actives

(30) Priorität: 02.12.2010 DE 102010062339
(43) Veröffentlichungstag der Anmeldung: 06.06.2012
(73) Patentinhaber: Atos Convergence Creators GmbH & Co. KG, 12435 Berlin (DE)
(72) Erfinder: Brenner, Jörg, 22303 Hamburg (DE); Wolff, Florian, 22453 Hamburg (DE)
(74) Vertreter: Novagraaf Technologies

(56) Entgegenhaltungen:
- EP-A2- 2 432 261
- WO-A2-98/34421
- DE-A1- 19 920 153
- DE-A1-102005 034 896
- DE-A1-102006 036 082
- US-A1- 2008 146 158
- MITSUBISHI ELECTRIC: "Dynamic Setup of HNBs for Energy Savings and Interference Reduction", 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG3, Nr. Jeju Island; 20080813, 13. August 2008 (2008-08-13), XP050165010,
- IMRAN ASHRAF ET AL: "Improving Energy Efficiency of Femtocell Base Stations Via User Activity Detection", WIRELESS COMMUNICATIONS AND NETWORKING CONFERENCE (WCNC), 2010 IEEE, IEEE, PISCATAWAY, NJ, USA, 18. April 2010 (2010-04-18), Seiten 1-5, XP031706720, ISBN: 978-1-4244-6396-1

## Beschreibung

### Technisches Gebiet

Die vorliegende Erfindung betrifft Verfahren zum Erkennen von Mobilstationen, welche aktiv in einem Funkkommunikationssystem wie z.B. einem Mobilfunknetz eingebucht sind. Eine Mobilstation wird dabei als aktiv bezeichnet, wenn diese eingeschaltet bzw. für Anrufe erreichbar ist. Das Funckommunikationssystem weist zumindest ein erstes Netzelement auf, welches eine Sende-Empfangseinrichtung für die Mobilstationen bildet. Zusätzlich ist ein zweites Netzelement vorgesehen, welches für ein netzseitiges Erkennen und Ansprechen der aktiven Mobilstationen eingerichtet ist.

### Stand der Technik

Eine Mobilstation wie z.B. ein Teilnehmerendgerät, Mobiltelefon, Smartphone, tragbare Computer mit Anbindung an Funkkommunikationssysteme, welches in einer so genannten Funkzelle eines Funkkommunikationssystems (z.B. Mobilfunknetz) eingebucht ist, tauscht mittels Funkwellen laufend Informationen mit einer ortsfesten Basisstation (z.B. Base Transceiver Station (BTS), Node B, etc.) des Funckommunikationssystem aus. In Mobilfunknetzen nach dem Standard des Global Systems for Mobile Communication (GSM) oder nach Standard des Universal Mobile Telecommunication Systems (UMTS) kann dieser Informationsaustausch beispielsweise durch einen Anruf oder mittels Daten wie z.B. einer Kurznachricht bzw. einem Short Message Service (SMS), etc. geschehen oder durch einen so genannten Location Update.

Mit dem Location Update wird in der Mobilfunktechnologie üblicherweise die Summe der technischen Schritte bezeichnet, welche für einen Zugang einer Mobilstation zu einem fremden Netzwerk oder bei einem Standortwechsel zu einer neuen Funkzelle im aktuellen Netzwerk notwendig sind. Mit dem Location Update wird folglich das Netzwerk bzw. die Netzwerckomponenten für den neuen Standort (location) des mobilen Endgerätes aktualisiert und in einer zentralen Komponente wie z.B. einem Home Location Register (HLR) hinterlegt, um eine Erreichbarkeit der jeweiligen Mobilstation zu gewährleisten.

Befinden sich im Sendebereich der Mobilstation andere elektronische Geräte, so können in diesen Geräten durch die Funkwellen Störungen verursacht werden. Aus diesem Grund ist beispielsweise in Krankenhäusern, Flugzeugen, insbesondere während Start und Landung, etc. die Nutzung von Mobilstationen untersagt. Vor allem in Flugzeugen wird befürchtet, dass die von private, funkbasierte Kommunikationseinrichtungen verursachten Funkwellen die Avionik des Flugzeugs stören können. Daher ist die Nutzung dieser Geräte heutzutage aus Sicherheitsgründen nur unter bestimmten, regulatorisch vorgegebenen Bedingungen zugelassen. In gewissen Bereichen wie z.B. in einem Kino oder Theater, etc. ist ebenfalls die Nutzung von Mobilstationen, insbesondere Mobiltelefonen, unerwünscht, da diese beispielsweise bei eingehenden Anrufen eine Vorstellung bzw. die Besucher stören können. Zusätzlich können aktive Mobilstationen in einigen Bereichen (z.B. Flugzeugen, öffentlichen Gebäuden, etc.) ein Sicherheitsrisiko darstellen, da sie beispielsweise auch als Fernzünder für Sprengsätze genutzt werden können.

Andererseits ist heutzutage die Verwendung von mobilen Kommunikationseinrichtungen sehr weit verbreitet. Es besteht damit zunehmend der Bedarf, private Kommunikationseinrichtungen wie z.B. Mobiltelefone, Laptops mit Funkverbindung, etc. möglichst einfach und uneingeschränkt - beispielsweise auch während einer Flugreise zu nutzen. Häufig wird von den Nutzern aber auch vergessen, ihre privaten Kommunikationseinrichtungen z.B. im Kino, im Theater, etc. lautlos zu stellen oder abzuschalten.

Häufig wird in den oben erwähnten Bereichen konsequent daran erinnert, mobile Kommunikationseinrichtungen auszuschalten, um Störungen zu verhindern. Dazu ist aber eine Kooperation der Nutzer oder eine manuelle Kontrolle notwendig.

Aus der Schrift EP 1961255 ist ein Verfahren zum Erkennen von aktiven Mobilstationen bekannt. Bei diesem Verfahren ist im Funknetzzugang eine Einrichtung integriert, welche Anzahl und Kennung der Mobilstationen registriert, die über diesen Funknetzzugang (z.B. Basisstation, Node B) in der zugehörigen Funkzelle eingebucht sind. Ausgelöst von einem externen Ereignis (z.B. Flugzeugstart, Beginn des Landanflugs, Vorstellungsbeginn im Kino und/oder Theater, etc.) können dann aktive Mobilstation über spezielle Sicherheits- oder Deaktivierungsnachrichten abgeschaltet werden. Allerdings weist das in der Schrift EP 1961255 offenbarte Verfahren den Nachteil auf, dass nur Mobilstationen inaktiv geschaltet werden können, die über einen mit einer entsprechend ausgestattenden und damit eindeutige bestimmten Funknetzzugang eingebucht sind. Mobilstationen, welche in anderen Funkzellen, die ebenfalls vom jeweiligen Standort erreichbar sind, eingebucht sind, können auf diese Weise nicht identifiziert werden. Diese Mobilstationen verursachen damit weiterhin störende Funkwellen bzw. eventuelle Störgeräusche oder stellen weiterhin ein Sicherheitsrisiko dar. Es muss daher z.B. trotzdem zeitaufwendig und mit Kosteneinsatz nach Sprengsätzen und/oder auffälligen elektronischen Zusatzschaltungen an Mobilstationen gesucht werden.

Weiterer Stand der Technik ist:
- US 2008/146158 A1,
- DE 10 2006 036082 A1,
- DE 10 2005 034896 A1,
- DE 199 20 153 A1,
- MITSUBISHI ELECTRIC: "Dynamic Setup of HNBs for Energy Savings and Interference Reduction", 3GPP DRAFT; R3-081949,
- IMRAN ASHRAF ET AL: "Improving Energy Efficiency of Femtocell Base Stations Via User Activity Detection", WIRELESS COMMUNICATIONS AND NETWORKING CONFERENCE (WCNC), IEEE, ISBN: 978-1-4244-6396-1,
- EP 2 432 261 A2, Stand der Technik gemäss Artikel 54(3) EPÜ,
- WO 98/34421 A2.

### Darstellung der Erfindung

Der Erfindung liegt daher die Aufgabe zugrunde, ein Verfahren zum Erkennen von aktiven bzw. eingeschalteten Mobilstationen anzugeben, durch welches an einem Standort bzw. in einem Bereich Mobilstationen, die ein Sicherheitsrisiko darstellen und/oder eingeschaltet sind, auf einfache und kostengünstige Weise zu einem bestimmten und ungefährlichen Zeitpunkt identifiziert werden können.

Die Erfindung ist im unabhängigen Anspruch 1 definiert. Weitere Merkmale sind in den abhängigen Ansprüchen 2-6 definiert.

Die Lösung dieser Aufgabe erfolgt, durch ein Verfahren der eingangs angegebenen Art, wobei eine Verbindungsaufnahme von Mobilstationen mit dem ersten Netzelement (z.B. Basisstation, Node B, Zugangspunkt für Wireless LAN, etc.) überwacht wird. Zu einem bestimmten, insbesondere ungefährlichen, Zeitpunkt werden das zweite Netzelement sowie ein Störsender aktiviert und durch den Störsender eine Kommunikation der aktiven - d.h. aktiv in einem Funkkommunikationssystem (z.B. Mobilfunknetz, Wireless LAN-Netz, etc.) eingebuchten - Mobilstationen zum zweiten Netzelement umgeleitet. Vom zweiten Netzelement werden dann diese Mobilstationen identifiziert und durch ein Signal derart angesprochen, dass diese Mobilstationen als aktiv erkannt werden können - beispielsweise durch Personal in einem sicherheitsrelevanten Bereich, Flugzeug, etc.

Der Hauptaspekt der Erfindung besteht darin, dass durch das erfindungsgemäße Verfahren auf einfache und kostengünstige Weise aktive Mobilstationen wie z.B. Mobiltelefone oder andere mobile Kommunikationsgeräte in bestimmten, sicherheitsrelevanten Bereichen gezielt angesprochen und erkannt werden können. Damit kann ein Nutzer einer aktiven Mobilstation z.B. ohne aufwendige, manuelle Suche rasch und zu einem bestimmten, unkritischen Zeitpunkt identifiziert und zum Abschalten der Mobilstation angehalten werden. Dadurch können z.B. Störungen durch Funkwellen und/oder Sicherheitsrisiken erheblich reduziert werden. Dabei kann ein Abschalten der Mobilstationen auch mit Hilfe des zweiten Netzelements überwacht werden. Wird trotz Aufforderung keine Abmeldung der aktiven Mobilstationen durchgeführt, dann können diese beispielsweise durch ein spezielles, technisches Verfahren, wie z.B. durch das in der Schrift EP 1961255 beschriebene Verfahren, automatisch und netzseitig deaktiviert werden. Das entsprechende Verfahren kann dabei am zweiten Netzelement eingerichtet sein und von diesem durchgeführt werden.

Zusätzlich weist das erfindungsgemäße Verfahren den Vorteil auf, dass Mobilstationen als aktiv erkannt werden können, welche in eine beliebige, im jeweiligen Bereich wirksame Funkzelle eingebucht sind. Durch den Störsender wird jede Kommunikation einer Mobilstation (z.B. Location Upddate, Übertragung von Daten, Anrufe, etc.) auf das zweite Netzelement umgeleitet, welches beispielsweise als Basisstation, insbesondere als sogenannte Picozelle ausgestaltet sein kann. Durch die Umleitung der Kommunikation sind aktive Mobilstationen zwar vom zweiten Netzelement ansprechbar, können aber von einem beliebigen anderen Funkkommunikationssystem - d.h. von extern - nicht erreicht, angerufen oder angesprochen werden. Auf diese wirksame Weise können aktive Mobilstationen z.B. in sicherheitsrelevanten Bereichen (z.B. öffentlichen Gebäuden, Flugzeugen, etc.) identifiziert und potentielle Sicherheitsrisiken ausgeschaltet werden.

Es ist vorteilhaft, wenn beim Erkennen von aktiven Mobilstationen eine Identifikation dieser Mobilstationen und/oder eine zugehörige Teilnehmer-Identifikation vom zweiten Netzelement ermittelt werden. Anhand dieser Identifikation kann dann für ein Erkennen der aktiven Mobilstationen vom zweiten Netzelement als Signal ein Anruf bzw. auch eine Datenübertragung zu diesen Mobilstationen aufgebaut werden. Durch das Ermitteln einer Identifikation sind dem zweiten Netzelement in einem definierten Bereich (z.B. Flugzeug, etc.) aktiven Mobilstationen bekannt und können damit gezielt mit einem Signal bzw. einem Anruf angesprochen werden.

Dabei ist es günstig, wenn durch das Signal und/oder den eingehenden Anruf die jeweils aktiven Mobilstationen zum Klingeln oder zum Vibrieren gebracht bzw. ein Vibrationsalarm ausgelöst werden. Auf diese Weise kann ein Teilnehmer bzw. ein Nutzer einer aktiven Mobilstation eindeutig identifiziert wird und damit zum Abschalten diese Mobilstation aufgefordert werden. Wird beispielsweise eine Mobilstation zum Zünden eines Sprengsatz genutzt, so kann durch das Signal des zweiten Netzelements dieser zu einem Zeitpunkt zum Detonieren gebracht werden, bei welchem keine Gefahr z.B. für Personen besteht - insbesondere, da durch den Einsatz des zweiten Netzelements diese Mobilstation von extern bzw. einem anderen Funkkommunikationssystem nicht erreichbar ist.

Es empfiehlt sich auch, wenn beispielsweise bei Annahme des eingehenden Anrufs für den Teilnehmer ein Hinweistext abgespielt wird. Mit diesem Hinweistext kann der Teilnehmer z.B. aufgefordert werden, seine Mobilstation auszuschalten. Alternativ könnten anstatt eines Anrufs auch Daten als Signal an die aktive Mobilstation gesendet werden, durch welche der Teilnehmer zum Deaktivieren der Mobilstation aufgefordert wird. Diese Daten könnten beispielsweise in Form einer Short Message (SMS), einer Multimedia-Message (MMS), E-mail, etc. an die aktive Mobilstation übermittelt werden und ebenfalls als Hinweistext ausgestaltet sein.

In dem erfindungsgemäßen Verfahren wird für ein Überwachen der Verbindungsaufnahme der Mobilstationen mit dem Funkkommunikationssystem ein Detektor eingesetzt. Vom Detektor werden dabei an einem Installationsort (z.B. Flugzeug, Flughafen, öffentlichem Gebäude, Gefahrenbereich, etc.) durch Scannen alle vorhandenen Funkkommunikationssysteme festgestellt. Daraus wird einen Liste von zu überwachenden Frequenzen für mögliche Verbindungsaufnahmen von Mobilstationen ermittelt. Auf diese einfache Weise können beispielsweise alle am Installationsort bzw. im zu überwachenden Bereich vorhandenen Funckommunikationssysteme (z.B. Mobilfunknetze verschiedener Betreiber, etc.) von einem Detektor überwacht und das erfindungsgemäße Verfahren auf einfache und kostengünstige Weise in verschiedenen, zu überwachenden Bereich eingesetzt werden. Beim Scannen der im zu überwachenden Bereich vorhandenen Funkkommunikationssysteme bzw. deren Frequenzen kann vom zweiten Netzelement auch einen Netzkennung des jeweiligen ersten Netzelements bzw. der vorhandenen Funkkommunikationssysteme erfasst werden. Dadurch können diese Funckommunikationssysteme auf einfache Weise vom zweiten Netzelement für ein Einbuchen der aktiven Mobilstationen emuliert werden.

Es ist günstig, wenn vom Störsender ein breitbandiges Rauschsignal derart ausgesendet wird, dass von den Mobilstationen bei der Verbindungsaufnahme nur das zweite Netzelement gefunden wird. Durch das Rauschsignal bzw. das sogenannte Jamming-Signal wird von einer aktiven Mobilstation einen Frequenz zu Verbindungsaufnahme mit dem zugehörigen Funckommunikationssystem verloren. Die Frequenz zur Verbindungsaufnahme mit dem zweiten Netzelement wird hingegen wesentlich besser empfangen. Damit wird auf einfache Weise die Kontaktaufnahme der aktiven Mobilstation zum zweiten Netzelement umgelenkt, um diese Mobilstation zu identifizieren und anzusprechen.

Eine zweckmäßige Ausgestaltung der Erfindung sieht vor, dass der Störsender in das zweite Netzelement integriert wird. Damit können beide Elemente auf einfache Weise ein- und ausgeschaltet werden. Außerdem gestaltet sich die Installation, insbesondere bei engen, zu überwachenden Bereichen wie z.B. dem Innenraum eines Flugzeugs, etc. kostengünstiger und einfacher.

Es ist außerdem vorteilhaft, wenn das zweite Netzelement, der Störsender und der Detektor als vom Funkkommunikationssystem unabhängige Komponenten ausgeführt werden. Dadurch können diese Komponenten - d.h. das zweite Netzelement, der Detektor und der Störsender - auf einfache Weise flexibel zu bestimmten Zeiten, an beliebigen Standorten und für verschiedene Funkkommunikationssysteme eingesetzt und auch ohne große Rüstzeiten in Betrieb genommen werden.

### Kurzbeschreibung der Zeichnung

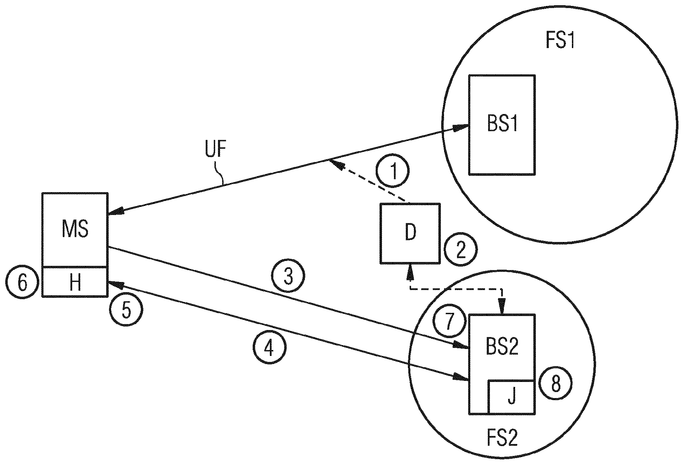

Die Erfindung wird nachfolgend in beispielhafter Weise anhand der beigefügten Figur erläutert. Dabei zeigt Figur 1 einen beispielhaften Ablauf des erfindungsgemäßen Verfahrens zum Erkennen von aktiven Mobilstationen in schematischer Weise.

### Ausführung der Erfindung

In der Figur 1 ist schematisch und beispielhaft ein Ablauf des erfindungsgemäßen Verfahrens dargestellt. Figur 1 zeigt eine beispielhafte Mobilstation MS, welche über einen Funknetzzugang bzw. über ein erstes Netzelement BS1 in eine Funkzelle eines beispielhaften Funkkommunikationssystem FS1 wie z.B. einem Mobilfunknetz nach dem GSM- und/oder UMTS-Standard eingebucht und damit aktiv ist. Das erste Netzelement BS1 kann dabei z.B. als Basisstation für ein Mobilfunknetz nach dem GSM-Standard - als so genannte Base Transceiver Station (BTS) - oder als Basisstation für ein Mobilfunknetz nach dem UMTS-Standard - als so genannter Node B - ausgeführt sein.

Das Funkkommunikationssystem FS1 gemäß der Erfindung kann neben einem beliebigen Mobilfunknetz wie z.B. nach dem bereits erwähnten GSM Standard oder einem Dienste integrierenden Netz wie z.B. dem bereits angeführten Mobilfunknetz gemäß dem UMTS-Standard auch ein System der vierten Generation sein. Hervorgehoben sei auch, dass unter einem Funkkommunikationssystem auch leitungsungebundene lokale Netze, wie beispielsweise WLAN (Wireless LAN gemäß dem Standard IEEE 802.11) sowie Breitbandnetze mit drahtlosem Zugang (beispielsweise nach dem Standard IEEE 802.16) und ähnliche Netze verstanden werden können.

Über eine Funkverbindung UF wird von der Mobilstation MS mittels Funkwellen Kontakt zum Funkkommunikationssystem FS1 über das erste Netzelement BS1 aufgenommen. Dies geschieht beispielsweise im Rahmen eines so genannten periodischen Location Updates, welcher eine Summe von technischen Schritten umfasst, die für einen Zugang der Mobilstation MS zu einem neuen bzw. fremden Funkkommunikationssystem oder bei einem Standortwechsel - d.h. Einbuchung in eine neue Funkzelle - in einem aktuellen Funkkommunikationssystem FS1 notwendig sind. Weiters wird von der Mobilstation MS auch bei einer Übertragung von Daten oder einer SMS oder bei einem Anruf eine Verbindung mittels Funkwellen zum ersten Netzelement BS1 bzw. zum aktuellen Funkkommunikationssystem FS1 hergestellt.

In einem Bereich bzw. an einem Standort, an welchem eine Störung durch Funkwellen von aktiven Mobilstationen MS z.B. aus Sicherheitsgründen unterbunden und/oder ein Sicherheitsrisiko durch z.B. als Fernzünder eingesetzte aktive Mobilstationen MS verhindert werden sollen, kann ein zweites Netzelement BS2 sowie eine Detektor D installiert werden. Sowohl das zweite Netzelement BS2 als auch der Detektor D sind dabei als von beispielhaften Funkkommunikationssystem FS1 unabhängige Komponenten ausgeführt und daher flexibel an beliebigen Installationsorten (z.B. Flugzeug, Flughafen, öffentlichen Orten, sicherheitsrelevanten Bereichen, etc.) einsetzbar. Das zweite Netzelement BS2 weist zusätzlich einen integrierten Störsender J, einen so genannten Jammer, auf, welche auch als externe Einheit ausgeführt sein kann.

Sollen nun in einem bestimmten, zu überwachenden Bereich (z.B. Flugzeug, etc.) aktive Mobilstationen MS identifiziert werden, so wird in einem ersten Verfahrensschritt 1 vom Detektor D mittels Scannen festgestellt, welche Funckommunikationssysteme FS1 am Installationsort vorhanden sind. Dabei werden von Detektor D z.B. bei Mobilfunknetzen nach GSM- bzw. UMTS-Standard zum Erkennen des Funkkommunikationssystems FS1 so genannte Downlink-Frequenzen gescannt. Bei einem GSM-Netz wird dabei z.B. die so genannte Broadcast Control Channel (BCCH)-Information ausgewertet. Dadurch kann vom Detektor D automatisch eine Liste von zu überwachenden Funkverbindungen UF bzw. von so genannten Uplink-Frequenzen, über welche von den Mobilstationen MS Kontakt mit dem Funkkommunikationssystem FS1 bzw. dem ersten Netzelement BS1 aufgenommen wird, abgeleitet werden.

Auf diese Weise muss nicht ein komplettes Spektrum, sondern nur die ermittelten Funkverbindungen UF bzw. die Uplink-Frequenzen überwacht werden. Zusätzlich kann beim Scannen der Downlink-Frequenzen vom Detektor D z.B. durch Auswertung der BCCH-Information bei einem GSM-Netz auch eine Netzkennung (z.B. Mobile Country Code (MCC), Mobile Network Code (MNC), Ortskennung (LOC)) der vorhandenen Funkkommunikationssystemen FS1 erfasst werden.

Zu einem bestimmten Zeitpunkt (z.B. kurz vor Start eines Flugzeugs, etc.) wird in einem zweiten Verfahrensschritt 2 das spezielle, zweite Netzelement BS2 sowie der Störsender J aktiviert. Vom Störsender J wird dabei ein breitbandiges Rauschsignal bzw. Jamming-Signal ausgesendet. Durch dieses Rauschsignal verlieren aktive Mobilstationen MS die Funkverbindung UF bzw. einen entsprechenden Träger für die Uplink-Frequenz UF zum ersten Netzelement BS1. Von den aktiven Mobilstationen MS kann nur noch eine Verbindung bzw. eine Trägerfrequenz zum zweiten Netzelement BS2 gesehen werden. Das bedeutet von einer aktiven Mobilstation MS wird das zweite Netzelement BS2 mit einem deutlich besserem Rauschabstand empfangen als alle anderen in diesem Bereich empfangbaren Netzelemente bzw. Basisstationen, darunter auch das erste Netzelement BS1.

In einem dritten Verfahrensschritt 3 wird daher einen Kommunikation der aktiven Mobilstationen MS zum zweiten Netzelement BS2 umgeleitet. D.h. beispielsweise beim GSM-Standard, dass sich die Mobilstation MS z.B. durch ein in den GSM-Normen (04.08) beschriebenes Verfahren in ein emuliertes Funkkommunikationssystem FS2 des zweiten Netzelements BS2 einbucht. Dabei wird durch Nachbilden der Netzkennung des ersten Netzelements BS1 im zweiten Netzelement BS2 und Aussenden dieser nachgebildeten Netzkennung sichergestellt, dass sich eine aktive Mobilstation MS auf jeden Fall in das vom zweiten Netzelement BS2 emulierte Funkkommunikationssystem FS2 einbuchen will und dort eine Location Updating-Prozedur durchlaufen wird. Die vom zweiten Netzelement BS2 nachgebildete Netzkennung kann dabei z.B. denselben Mobile Country Code (MCC) und denselben Mobile Network Code (MNC), aber eine andere Ortskennung (LOC) wie die Netzkennung des ersten Netzelements BS1 aufweisen. Das bedeutet, das zweite Netzelement BS2 präsentiert sich durch das emulierte Funkkommunikationssystem FS2 und durch die nachgebildete Netzkennung für die Mobilstation MS wie eine neue Basisstation bzw. wie ein Wechsel der Funkzelle im regulären Funkkommunikationssystem FS1.

In einem vierten Verfahrensschritt 4 kann dann beim Durchlaufen der Location Updating-Prozedur eine Identifikation der Mobilstation MS (z.B. IMEI) und/oder eine zur Mobilstation MS zugehörige Teilnehmeridentifikation (z.B. IMSI) abgefragt werden. Im vierten Verfahrensschritt 4 kann dann die aktive Mobilstation MS durch ein Signal wie z.B. durch Aussenden eines sogenannten Paging Request vom zweiten Netzelement BS2 angesprochen werden. Wird auf dieses Signal durch die aktive Mobilstation MS durch einen Aufbau eines Signalisierungskanals geantwortet, so kann beispielsweise die aktive Mobilstation MS je nach Einstellung in einem fünften Verfahrensschritt 5 zum Klingeln oder Vibrieren gebracht werden. Wird im fünften Verfahrensschritt 5 von einem Teilnehmer bzw. von einem Nutzer der aktiven Mobilstation MS dieses Klingeln oder Vibrieren durch Abnehmen erwidert, so kann in einem sechsten Verfahrensschritt 6 über einen dann etablierten Sprachkanal ein Hinweistext H - z.B. eine Aufforderung zum Abschalten der Mobilstation MS - abgespielt werden.

Alternativ ist es auch möglich, im fünften Verfahrensschritt 5 statt eines Anrufaufbaus Daten (z.B. SMS, MMS, E-mail, etc.) zur aktiven Mobilstation MS zu übertragen, welche einen Hinweistext H enthalten. Der Hinweistext H kann dann im sechsten Verfahrensschritt 6 auf der Mobilstation für den Nutzer angezeigt werden.

In einem siebenten Verfahrensschritt 7 wird vom zweiten Netzelement BS2 überwacht, ob vom Nutzer die Mobilstation MS vom Funkkommunikationssystem FS2 abgemeldet und damit deaktiviert wird. Wird die Mobilstation MS nicht abgemeldet bzw. deaktiviert, so kann erneut ein Hinweistext H z.B. mittels Anruf oder Datennachricht übermittelt werden oder es wird vom zweiten Netzelement BS2 ein technisches Verfahren, wie z.B. das in der Schrift EP 1961255 beschriebene Verfahren zum netzseitigen Deaktivieren ausgeführt. Das zweite Netzelement BS2 kann dabei beispielsweise als spezielle Basisstation ausgeführt sein, welche zur Durchführung eines solchen Verfahrens eingerichtet ist.

Im zu überwachenden Bereich werden dann die Verfahrensschritte 4 bis 6 für alle mittels Teilnehmerkennung als aktiv identifizierten Mobilstationen MS durchgeführt. D.h. nacheinander wird vom zweiten Netzelement BS2 zu allen als aktiv erkannten Mobilstationen MS ein Kontakt aufgebaut und z.B. ein Hinweistext H - entweder als Sprachnachricht oder als Textnachricht übermittelt sowie die Deaktivierung dieser Mobilstationen MS überwacht. Nachdem alle als aktiv identifizierten Mobilstationen MS kontaktiert worden sind bzw. deren Deaktivierung im siebenten Verfahrensschritt 7 festgestellt worden ist, wird in einem achten Verfahrensschritt 8 sowohl das zweite Netzelement BS2 als auch der Störsender J abgeschaltet.

## Patentansprüche

1. Verfahren zum Erkennen von Mobilstationen (MS), welche aktiv in einem Funkkommunikationssystem (FS1) eingebucht sind, wobei das Funkkommunikationssystem (FS1) zumindest ein erstes Netzelement (BS1) umfasst, welches eine Sende-Empfangseinrichtung für diese Mobilstationen (MS) bildet, und wobei ein zweites Netzelement (BS2) vorgesehen ist, welches in einem zu überwachenden Bereich installiert ist und für ein netzseitiges Erkennen und Ansprechen der aktiven Mobilstationen (MS) eingerichtet ist, wobei im zu überwachenden Bereich eine Verbindungsaufnahme der Mobilstationen (MS) zum ersten Netzelement (BS1) des Funkkommunikationssystems (FS1) überwacht wird (1), wobei zu einem Zeitpunkt das zweite Netzelement (BS2) sowie ein Störsender (J) aktiviert werden (2), wobei dann eine Kommunikation der aktiven Mobilstationen (MS) zum zweiten Netzelement (BS2) umgeleitet wird (3), wobei dann diese Mobilstationen (MS) vom zweiten Netzelement (BS2) identifiziert und durch ein Signal derart angesprochen werden (4), dass eine Antwort dieser Mobilstationen ausgelöst wird (5, 6), wobei ein Detektor (D) im zu überwachenden Bereich zum Überwachen der Verbindungsaufnahme der Mobilstationen (MS) mit dem Funkkommunikationssystem (FS1) eingesetzt wird (1), **dadurch gekennzeichnet dass** vom Detektor (D) durch Scannen an einem Installationsort vorhandene Funkkommunikationssysteme (FS1) festgestellt werden (1), und wobei daraus eine Liste von zu überwachenden Frequenzen für mögliche Verbindungsaufnahmen der Mobilstationen (MS) abgeleitet wird.

2. Verfahren nach Anspruch 1, **dadurch gekennzeichnet, dass** beim Erkennen von aktiven Mobilstationen (MS) eine Identifikation dieser Mobilstationen (MS) und/oder eine zugehörige Teilnehmer-Identifikation vom zweiten Netzelement (BS2) ermittelt werden (4), und dass für ein Erkennen der aktiven Mobilstationen (MS) vom zweiten Netzelement (BS2) als Signal ein Anruf zu diesen Mobilstationen (MS) aufgebaut wird (4).

3. Verfahren nach einem der Ansprüche 1 bis 2, **dadurch gekennzeichnet, dass** für das Erkennen die aktiven Mobilstationen (MS) durch das Signal und/oder den eingehenden Anruf zum Klingeln oder zum Vibrieren gebracht werden (5).

4. Verfahren nach einem der Anspruch 2 oder Anspruch 3, **dadurch gekennzeichnet, dass** bei Annahme des eingehenden Anrufs ein Hinweistext (H) abgespielt wird (6).

5. Verfahren nach einem der Ansprüche 1 bis 4, **dadurch gekennzeichnet, dass** vom Störsender (J) ein breitbandiges Rauschsignal derart ausgesendet wird(2), dass von den Mobilstationen (MS) bei der Verbindungsaufnahme nur das zweite Netzelement (BS2) gefunden wird.

6. Verfahren nach einem der Ansprüche 1 bis 5, **dadurch gekennzeichnet, dass** der Störsender (J) in das zweite Netzelement (BS2) integriert wird.

## Claims

1. Method for detecting mobile stations (MS) which are actively logged into a radio communication system (FS1), wherein the radio communication system (FS1) comprises at least one first network element (BS1) which forms a transmitting/receiving device for these mobile stations (MS), and wherein a second network element (BS2) is provided which is installed in a region to be monitored and is designed for network-side detection and addressing of the active mobile stations (MS), wherein, in the region to be monitored, establishment of a connection of the mobile stations (MS) to the first network element (BS1) of the radio communication system (FS1) is monitored (1), wherein the second network element (BS2) and a jammer (J) are activated (2) at a point in time, wherein a communication of the active mobile stations (MS) with the second network element (BS2) is then rerouted (3), wherein these mobile stations (MS) are identified by the second network element (BS2) and addressed by a signal (4) such that a response is triggered (5, 6) from these mobile stations, wherein a detector (D) is employed (1) in the region to be monitored in order to monitor the establishment of a connection of the mobile stations (MS) with the radio communication system (FS1), **characterised in that** the detector (D) detects (1) available radio communication systems (FS1) by scanning at an installation location, and a list of frequencies to be monitored for possible establishment of connections of the mobile stations (MS) is derived therefrom.

2. Method according to claim 1, **characterised in that** when active mobile stations (MS) are detected, an identification of these mobile stations (MS) and/or an associated subscriber identification are determined (4) by the second network element (BS2), and a call to the mobile stations (MS) to set up (4) from the second network element (BS2) as a signal for detecting the mobile stations (MS).

3. Method according to one of claims 1 or 2, **characterised in that** for the detection, the active mobile stations (MS) are caused to ring or to vibrate (5) by the signal and/or the incoming call.

4. Method according to one of claim 2 or claim 3, **characterised in that** a notification text (H) is played (6) when the incoming call is accepted.

5. Method according to one of claims 1 to 4, **characterised in that** a broadband noise signal is emitted (2) by the jammer (J) such that only the second network element (BS2) is found by the mobile stations (MS) when the connection is established.

6. Method according to one of claims 1 to 5, **characterised in that** the jammer (J) is incorporated in the second network element (BS2).

## Revendications

1. Procédé de reconnaissance de stations mobiles (MS), qui sont inscrites comme étant actives dans un système de radiocommunication (FS1), dans lequel le système de radiocommunication (FS1) comporte au moins un premier élément de réseau (BS1) qui forme un dispositif d'émission-réception pour ces stations mobiles (MS), et dans lequel est prévu un second élément de réseau (BS2), qui est installé dans une zone à surveiller et est agencé pour reconnaître et adresser côté réseau les stations mobiles actives (MS), dans lequel, dans la zone à surveiller, un établissement de liaison des stations mobiles (MS) vers le premier élément de réseau (BS1) du système de radiocommunication (FS1) est surveillé (1), dans lequel le second élément de réseau (BS2) ainsi qu'un émetteur perturbateur (J) sont activés (2) à un instant, dans lequel ensuite une communication des stations mobiles (MS) actives est déroutée (3) vers le second élément de réseau (BS2), dans lequel ensuite ces stations mobiles (MS) sont identifiées par le second élément de réseau (BS2) et adressées (4) par un signal de sorte qu'une réponse de ces stations mobiles est déclenchée (5, 6), dans lequel un détecteur (D) est mis en œuvre (1) dans la zone à surveiller pour la surveillance de l'établissement de liaison des stations mobiles (MS) avec le système de radiocommunication (FS1), **caractérisé en ce que** des systèmes de radiocommunication (FS1) présents à un lieu d'installation sont déterminés (1) par le détecteur (D) par balayage, et dans lequel il en est déduit une liste de fréquences à surveiller pour d'éventuels établissements de liaison des stations mobiles (MS).

2. Procédé selon la revendication 1, **caractérisé en ce que**, lors de la reconnaissance de stations mobiles (MS) actives, une identification de ces stations mobiles (MS) et/ou une identification associée d'abonnés sont déterminées (4) par le second élément de réseau (BS2), et **en ce que**, pour une reconnaissance des stations mobiles (MS) actives par le second élément de réseau (BS2), un appel à ces stations mobiles (MS) est établi en tant que signal.

3. Procédé selon l'une quelconque des revendications 1 à 2, **caractérisé en ce que**, pour la reconnaissance, les stations mobiles (MS) actives sont amenées (5) à sonner ou à vibrer par le signal et/ou par l'appel arrivant.

4. Procédé selon l'une de la revendication 2 ou de la revendication 3, **caractérisé en ce que**, lors de l'acceptation de l'appel arrivant, un texte indicateur (H) est exécuté (6).

5. Procédé selon l'une quelconque des revendications 1 à 4, **caractérisé en ce qu'**un signal de bruit large bande est émis (2) par l'émetteur perturbateur (J) de sorte qu'uniquement le second élément de réseau (BS2) est trouvé par les stations mobiles (MS) lors de l'établissement de liaison.

6. Procédé selon l'une quelconque des revendications 1 à 5, **caractérisé en ce que** l'émetteur perturbateur (J) est intégré dans le second élément de réseau (BS2).
